(19) Europäisches Patentamt
European Patent Office
Office européen des brevets

(11) EP 0 489 370 B1

(12) **EUROPEAN PATENT SPECIFICATION**

(45) Date of publication and mention of the grant of the patent:
**05.02.1997 Bulletin 1997/06**

(51) Int Cl.6: **C08F 20/12**

(21) Application number: **91120557.3**

(22) Date of filing: **29.11.1991**

(54) **Process for preparing polymer**

Verfahren zur Herstellung eines Polymers

Procédé de préparation d'un polymère

(84) Designated Contracting States:
**DE FR GB IT**

(30) Priority: **29.11.1990 JP 335861/90**

(43) Date of publication of application:
**10.06.1992 Bulletin 1992/24**

(73) Proprietor: **DAIKIN INDUSTRIES, LIMITED**
**Osaka-shi, Osaka-fu 530 (JP)**

(72) Inventors:
- **Yutani, Yuji, c/o Yodogawa Works of Settsu-shi, Osaka-fu (JP)**
- **Tatemoto, Masayoshi, c/o Yodogawa Works of Settsu-shi, Osaka-fu (JP)**

(74) Representative:
**Hansen, Bernd, Dr. Dipl.-Chem. et al**
**Hoffmann, Eitle & Partner**
**Patent- und Rechtsanwälte,**
**Postfach 81 04 20**
**81904 München (DE)**

(56) References cited:
**US-A- 3 983 187** **US-A- 4 158 678**

EP 0 489 370 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a novel process for preparing a polymer comprising at least one polymer chain.

In particular, the present invention relates to a polymerization process which is apparently a living polymerization though a reaction mechanism is inherently a radical polymerization, and further an improved process for preparing a block polymer.

More concretely, the present invention relates to a process for preparing a polymer which can be used as an improver of adhesion of a hydrocarbon polymer to a fluorine-containing polymer surface; a compatibilizer of a polymer alloy which comprises a hydrocarbon polymer and a fluorine-containing polymer; a dispersant for a fluorine-containing paint; a carrier of an electrophotography; an electrostatic charge adjusting or fusion bonding preventing agent for toner particles; in case where the hydrocarbon polymer chain is hydrophilic, a fluorine-containing surfactant, an emulsifier or a dispersant of a fluorocarbon base artificial blood.

Japanese Patent Publication No. 4728/1983 and U.S. Patent No. 4,158,678 disclose a process for synthesizing a block polymer by cleaving a carbon-iodine bond of an iodide compound to form a carbon radical and successively radically polymerizing radically polymerizable monomers.

In the above process, since a single hydrocarbon monomer is polymerized when a hydrocarbon monomer is intended to be polymerized with a fluorine-containing iodide polymer, it is not possible to polymerize the hydrocarbon monomer effectively.

Further, since a terminal carbon-iodine bond in the formed polymer is unstable, in some applications, it is necessary to replace the terminal iodine with other element which forms a stable bond. Hitherto, in a reaction for stabilizing the terminal iodine, a large amount of a peroxide is required.

United States patent application US-3983187 discloses iodine molecular weight regulators in suspension polymerisation systems. An aqueous suspension graft copolymerization system is described wherein at least one polymerizable monomer is graft polymerized with at least one elastomeric polymer in the presence of elemental iodine as a molecular weight modifier.

## SUMMARY OF THE INVENTION

An object of the present invention is to provide a process for preparing a polymer, which can solve the above problems of the conventional process.

Another object of the present invention is to provide a process for preparing a polymer, wherein the above monomers are polymerized at a high efficiency, namely a high iodine bonding rate.

One aspect of the present invention is directed to the improvement of the polymerization process disclosed in Japanese Patent Publication No. 4728/1983.

According to the present invention, there is provided a process for preparing a polymer which comprises polymerizing at least one monomer $M_1$ having a radically polymerizable unsaturated bond, in the presence of a monomer $M_2$, which is different from said monomer $M_1$, a radical generating source and an iodide compound having a cleavable carbon-iodine bond and capable of producing a carbon radical and an iodine atom upon cleavage to form at least one polymer chain between said carbon atom and said iodine atom, wherein said monomer $M_2$ has a larger addition reactivity with a carbon radical than said monomer $M_1$ and a copolymerization reaction rate $r_2$ of substantially zero, and wherein said monomer $M_1$ has a copolymerization reaction rate $r_1$ greater than 1 and less than 100.

According to a further aspect of the present invention, there is provided a process for preparing a polymer which comprises

polymerizing at least one monomer $M_1$, having a radically polymerizable unsaturated bond, in the presence of a monomer $M_2$, which is different from said monomer $M_1$, a radical generating source and an iodine compound having a cleavable carbon-iodine bond and capable of producing a carbon radical and an iodine atom upon cleavage, to form at least one polymer chain between said carbon radical and said iodine atom,

wherein said monomer $M_2$ has a larger addition reactivity with said carbon radical than said monomer $M_1$, and a copolymerization reaction rate $r_2$ of smaller than 2, and

wherein said iodine atom of said iodine compound may be withdrawn by a radical of said $M_2$ monomer to form a terminal iodide bond between said $M_2$ monomer radical and said iodine atom, said iodine atom of said terminal iodide bond having substantially the same chain transfer reactivity as said iodine atom when bonded to said iodine compound.

Preferred features of these processes are contained in the claims 2 and 4 to 10.

Fig. 1 is an IR spectrum of a polymer prepared in Comparative Example 1.

Fig. 2 is an IR spectrum of a polymer prepared in Example 1.

Fig. 3 is an IR spectrum of a polymer prepared in Example 3.
Fig. 4 is an IR spectrum of a polymer prepared in Example 5.
Figs. 5 and 6 are IR spectra of two polymers prepared in Example 7.
Fig. 7 is an IR spectrum of a polymer prepared in Example 8.
Fig. 8 is a graph showing a contact angle measured in Example 10.
Fig. 9 is a graph showing a surface tension of water measured in Example 11.

In case where a monomer such as a hydrocarbon vinyl monomer is polymerized with a radical which is generated through cleavage of the terminal carbon-iodine bond of the iodide compound, if the vinyl monomer has a low reactivity with the carbon radical, it is difficult to proceed the addition reaction of the vinyl monomer, that is, a polymer which is bonded to an iodide residue (a residue formed by removing the iodine atom from the iodide compound) is hardly formed, even though the radical is generated from the iodide compound in the presence of the vinyl monomer.

In contrast, when an unsaturated compound having a high reactivity with the carbon radical from the iodide compound is used, that is, when an unsaturated compound $M_2$ such as ethylene or other α-olefin which can be alternating copolymerized with a fluorine-containing vinyl monomer $M_1$ such as tetrafluoroethylene or chlorotrifluoroethylene (namely, $r_1 \simeq r_2 \simeq 0$) is used, the monomer $M_2$ is easily added to the carbon radical from the iodide compound.

Because most of well used radically polymerizable monomers such as methyl acrylate, methyl methacrylate and acrylonitrile have very low reactivities with the carbon radical from the iodide compound, a homopolymer of each monomer is produced but it is difficult to polymerize one of them with the carbon radical from the iodide compound.

When, in the presence of the carbon radical from the iodide compound, an unsaturated compound having a high reactivity with such carbon radical (a monomer $M_2$) is used in combination with the radical polymerizable hydrocarbon vinyl monomer having a low reactivity with such carbon radical, the monomer $M_2$ bonds to the carbon radical and thereafter a hydrocarbon polymer chain comprising the hydrocarbon vinyl monomer and the unsaturated compound monomer $M_2$ grows by the radical polymerization to give a polymer comprising the hydrocarbon polymer chain.

In this case, it is essential that the hydrocarbon monomer $M_1$ is copolymerized with the terminal radical of the unsaturated compound $M_1$, namely $1/r_2$ is not zero (0). In addition, in order that a larger amount of the intended hydrocarbon vinyl monomer is contained in the hydrocarbon polymer chain segment, preferably $r_1 >> r_2 \simeq 0$.

If, when the growing polymer terminal carbon radical withdraws the iodine atom from other iodide compound molecule, the withdrawal finishes at the chain end ($1/r_1$ is not zero and $1/r_2$ is not zero), namely, the polymer terminal which is stopped through the withdrawal of the iodine atom to form a terminal of ---$M_2$-I, that is, if the terminal iodine atom of the ---$M_2$-I type terminal is easily radically chain transferred, the hydrocarbon polymer chain grows in the same manner as a living polymerization. In this case, the iodine atom of said terminal iodide bond has substantially the same transfer reactivity as said iodine atom when bonded to said iodide compound.

The iodide compound used in the present invention is a compound to which at least one iodine atom is bonded, which is stable to such degree that it cannot lose effectiveness through a side reaction under the polymerization conditions and any bond of which other than the bond comprising the iodine atom is not cleaved by the attack of the radical. The iodide compound may contain a fluorine atom. Further, the iodide compound'may comprise an element other than carbon, iodine and hydrogen, such as chlorine. In addition, the iodide compound may contain a functional group such as -O-, -S-, $R_fN$- in which $R_f$ is a polyfluoroalkyl group, -COOH, $SO_3H$, $PO_3OH$, etc.

Preferably, the iodide compound is a low molecular weight perfluorinated alkyl iodide.

In general, the iodide compound includes not only a low molecular weight compound but also a polymeric iodide compound having a molecular weight of 2,000,000 or less which is prepared by polymerization or copolymerization of an unsaturated compound having an iodine atom; coupling of a polyiodinated fluorohydrocarbon; iodination of a polymer having a reactive atom or atom group; polymerization in a polymerization system in which a chain transfer reaction to a polymer easily takes place in the presence of iodine $I_2$; or polymerization of a monomer which constitutes a polymer chain in the presence of iodine or a compound which can liberate an iodine atom such as KI or ROI wherein R is an alkyl group.

Specific examples of the polymer chain iodide are fluorine-containing iodides, for example, iodine-containing homopolymer or copolymer prepared by the polymerization as describe above of tetrafluoroethylene, trifluoroethylene, vinylidene fluoride, vinyl fluoride, chlorotrifluoroethylene, hexafluoropropylene, pentafluoropropylene, perfluorocyclobutene, perfluoro(methylenecyclopropane), perfluoroallene, perfluorostyrene, perfluorovinyl ethers (such as perfluoromethyl vinyl ether), perfluoroacrylic acid, perfluorovinylacetate, perfluoro(3-vinyloxypropionic acid), perfluoro[2-(2-fluorosulfonylethoxy)propyl vinyl ether] and polyfluorodienes. Other examples are fluorine-containing copolymers of at least one of these radically polymerizable fluorolefins with at least one hydrocarbon monomer which can form a suitable polymer chain by the copolymerization with these fluorolefins. Examples of such hydrocarbon monomer are ethylene, α-olefin (e.g. propylene and butene), vinyl carboxylate ester (e.g. vinyl acetate), vinyl ether (e.g. methyl vinyl ether) and aryl carboxylate ester (e.g. aryl acetate). In addition, further examples of the polymer chain iodide are iodine-containing compounds having a chain of the formula:

$$-(OCF_2)_p-(OCF_2CF_2)_q-[OCF_2CF(CF_3)]_r-$$

wherein p, q and r are independently 0 or a positive number, and at least one of them is not 0, or the formula:

$$-(CF_2CF_2CXYO)_n-$$

wherein n is a positive number, and X and Y are independently a fluorine atom or a hydrogen atom.

Of course, a polymer prepared according to the present invention may be used as the iodide compound. All polymer chain iodides prepared in the presence of an iodide compound by using the method of present invention are used as the hydrocarbon iodide compound. Specific examples are an ethylene/propylene rubber and polybutadiene in which iodine bonds to a molecular end. In addition, the following iodide compounds can be also used:

Polymeric iodides based on polyolefin, polyether, polyester, polyamide, polyurethane or silicone, for example,

$I-(CH_2CHPh)_n-I$ (wherein Ph is a phenyl group),
$ICH_2-(CH_2CHOAc)_n-(CH_2CH_2)_m-I$ (wherein Ac is an acetate group)

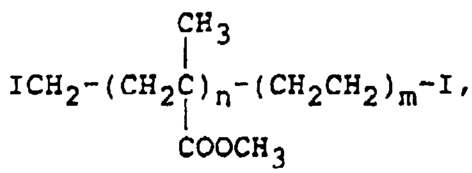

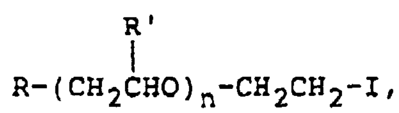

$R-(O-R''-CO)_n-CH_2CH_2-I$,
$R-(Ph'-O)_n-CH_2CH_2-I$ (wherein Ph' is a phenylene group),
$R-(CO-R''-NH)_n-CH_2CH_2-I$, and

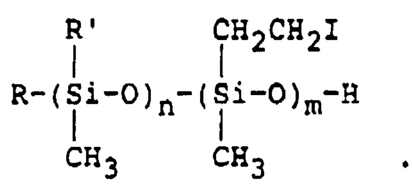

Specific examples of a low molecular weight iodide compound are flurorine-containing compounds such as monoiodoperfluoromethane, monoiodoperfluoroethane, monoiodoperfluoropropane, monoiodoperfluorobutane (e,g. 2-iodoperfluorobutane, 1-iodoperfluoro(1,1-dimethylethane) and the like), monoiodoperfluoropentane (e.g. 1-iodoperfluoro (4-methylbutane) and the like), 1-iodoperfluoro-n-nonane, monoiodoperfluorocyclobutane, 2-iodoperfluoro(1-cyclobutyl)ethane, monoiodoperfluorocyclohexane, monoiodotrifluorocyclobutane, monoiododifluoromethane, monoiodomonofluoromethane, 2-iodo-1-hydroperfluoroethane, 3-iodo-1-hydroperfluoropropane, monoiodomonochlorodifluoromethane, monoiododichloromonofluoromethane, 2-iodo-1,2-dichloro-1,1,2-trifluoroethane, 4-iodo-1,2-dichloroperfluorobutane, 6-iodo-1,2-dichloroperfluorohexane, 4-iodo-1,2,4-trichloroperfluorobutane, 1-iodo-2,2-dihydroperfluoropropane, 1-iodo-2-hydroperfluoropropane, monoiodotrifluoroethane, 3-iodoperfluoroprop-1-ene, 4-iodoperfluoropentene-1,4-iodo-5-chloroperfluoropent-1-ene, 2-iodoperfluoro(1-cyclobutenyl)ethane, 1,3-diiodoperfluoro-n-propane, 1,4-diiodoperfluoro-n-butane, 1,3-diiodo-2-chloroperfluoro-n-propane, 1,5-diiodo-2,4-dichloroperfluoro-n-pentane, 1,7-diiodoperfluoro-n-octane, 1-iodoperfluorodecane, 1,12-diiodoperfluorododecane, 1,16-diiodoperfluorohexadecane, 1,2-di(iododifluoromethyl)perfluorocyclobutane, 2-iodo-1,1,1-trifluoroethane, 1-iodo-1-hydroperfluoro (2-methylethane), 2-iodo-2,2-dichloro-1,1,1-trifluoroethane, 2-iodo-2-chloro-1,1,1-trifluoroethane, 2-iodoperfluoroethyl

perfluorovinyl ether, 2-iodoperfluoroethyl perfluoroisopropyl ether, 3-iodo-2-chloroperfluorobutyl perfluoromethyl ether, 3-iodo-4-chloroperfluorobutyric acid, iodopentafluorocyclohexane, 1,4-diiodotetrafluorocyclohexane and 1,4-di(iododifluoromethyl)tetrafluorocyclohexane. Further specific examples are hydrocarbon iodide compounds such as $CH_3I$, $CH_2I_2$, $CHI_3$, $ICH_2CH_2I$, $CH_2=CHCH_2CH_2I$, $CH_2=CH_2$, iodobenzene, 1,4-diiodobenzene, 1,4-di(iodomethyl)benzene. The iodide compound is not limited to the above compounds.

Specific examples of the monomer $M_1$ are acrylic unsaturated compounds, for example, acrylic acid, methacrylic acid, methyl acrylate, ethyl acrylate, butyl acrylate, methyl methacrylate, ethyl methacrylate, butyl methacrylate, glycidyl methacrylate, glycidyl acrylate, 2-hydroxyethyl acrylate, 2-ethylhexyl acrylate, potassium methacrylate, cyclohexyl methacrylate, 2-(dimethylamino)ethyl methacrylate, stearyl methacrylate, 2-hydroxyethyl methacrylate, 2-hydroxypropyl methacrylate, vinyl methacrylate, benzyl methacrylate, lauryl methacrylate, acrylamide, acrolein, methacrylamide, methacrolein, acrylonitrile, methacrylonitrile, styrene, methylstyrene, chlorostyrene, vinyl acetate, vinyl propionate, vinyl butyrate, vinyl valerate, vinyl chloride, vinyltrichlorosilane, vinyltrimethoxysilane, vinyltrimethylsilane, butadiene, isoprene, chloroprene, maleic acid, maleinimide, methyl maleate, ethyl maleate, propyl maleate, butyl maleate, calcium maleate, allyl maleate, 2-ethylhexyl maleate, octyl maleate, maleic hydrazide, meleic anhydride, fumaric acid, methyl fumarate, ethyl fumarate, propyl fumarate, butyl fumarate, sodium fumarate, fumaronitrile and fumaryl chloride.

Specific examples of a fluorine-containing monomer $M_1$ are tetrafluoroethylene, trifluoroethylene, vinylidene fluoride, vinyl fluoride, chlorotrifluoroethylene, hexafluoropropylene, pentafluoropropylene, perfluorocyclobutene, perfluoro (methylenecyclopropane), perfluoroallene, trifluorostyrene, perfluorostyrene, perfluorovinyl ethers [e.g. perfluoro(methyl vinyl ether), perfluoro(ethyl vinyl ether), perfluoro(propyl vinyl ether) and the like], perfluoroacrylic acid, perfluorovinylacetic acid, perfluoro(3-vinyloxypropionic acid), perfluoro(2-(2-fluorosulfonylethoxy)propyl vinyl ether], $\alpha$-fluoroacrylic acid, methyl $\alpha$-fluoroacrylate, ethyl $\alpha$-fluoroacrylate, phenyl $\alpha$-fluoroacrylate, 3,3,4,4,4-pentafluorobut-1-ene, 3,3,3-trifluoropropene, 3,3,4,4,5,5,5-heptafluoropent-1-ene and polyfluorodienes.

Specific examples of the monomer $M_2$ are ethylene, other $\alpha$-olefins (e.g. propylene, butene, isobutene, pentene, hexene, heptene and octene), vinyl ethers (e.g. methyl vinyl ether, ethyl vinyl ether, propyl vinyl ether and), allyl esters (e.g. allyl acetate, allyl propionate and allyl butyrate), and vinylsilanes (e.g. vinyltrimethylsilane, vinyltriethylsilane, vinyltriphenylsilane, and vinyltrichlorosilane). Among them the $\alpha$-olefins are preferred.

These examples do not limit the scope of the present invention. Insofar as the monomers satisfy the conditions set by the present invention, the vinyl monomer which is exemplified as the monomer $M_1$ may be used as the monomer $M_2$, or the vinyl monomer which is exemplified as the monomer $M_2$ may be used as the monomer $M_1$.

According to the process of the present invention, it is possible to produce not only a polymer consisting of one polymer chain but also a block polymer consisting of at least two different polymer chains. Herein, the term "different polymer chains" is intended to mean that all the constituent monomers are different between two polymer chains and also that a ratio of two or more monomers and/or a bonding sequence thereof are different between the two polymer chains though the kinds of the monomers are the same.

In the present invention, the Iodide Bonding Ratio (IBR) is calculated as a ratio of the polymer which is formed by the addition of the vinyl monomer to the cleaved carbon-iodine bond of the iodide compound according to the following equation:

$$\text{IBR (\%)} = \frac{\text{The number of the carbon-iodine bonds which are cleaved and contribute to the polymerization}}{\text{The number of the carbon-iodine bonds of the iodide compound molecules}} \times 100$$

Since a peak in an IR spectrum based on the terminal iodine bond of a polymer which is produced by using $F(CF_2CF_2CF_2O)_n\text{-}CF_2CF_2I$ appears around 920 $cm^{-1}$, IBR after the polymerization reaction can be calculated according to the following equation:

$$\frac{\text{(An absorbance peak height at 925 cm}^{-1}\text{ before reaction) - (an absorbance peak height at 925 cm}^{-1}\text{ after reaction)}}{\text{(An absorbance peak height at 925 cm}^{-1}\text{ before reaction)}} \times 100$$

Further, in the $^{19}F$-NMR, since a chemical shift based on $-OCF_2\underline{CF_2}I$ appears around -12.5 ppm, IBR can be calculated from this chemical shift. It it understood from the results in Examples that the calculated IBR values are substantially the same at the real ones.

When the $M_2$ monomer is not used, IBR is greatly influenced by a kind of the $M_1$ monomer and, in general, considerably low. A degree of the decrease of IBR cannot be sufficiently recovered even if the polymerization temperature and/or the monomer concentration are selected in favor of the chain transfer reaction of the iodide compound, that is,

a high reaction temperature and a low monomer concentration are selected since such conditions are favorable to the chain transfer reaction of the iodide compound.

When the monomer $M_2$ is used in combination with the monomer $M_1$, the addition of only several moles of the monomer $M_2$ increases IBR by 50 % or more depending on the kind of the monomer $M_2$, and IBR increases up to about 100 % as the concentration of the monomer $M_2$ increases. This is one of the most significant effects of the present invention.

The polymer prepared by the present invention has a molecular weight of 4,000,000 or less, in general from 1000 to 4,000,000.

If the carbon-iodine bond which is easily cleaved by heat or light remains at the terminal of the prepared polymer, the iodine atoms are easily liberated, so that some disadvantages tend to appear, for example, the polymer is deteriorated or colored, or a material which is contacted to the polymer is corroded. To prevent such disadvantages, it is preferably to replace the terminal iodine with other element which forms a stable bond with the carbon atom. In such replacing reaction, the terminal carbon-iodine bond of the polymer is cleaved with heat, light or a radical initiator in the presence of a compound containing an element which is easily radical chain transferred (e.g. isopentane, toluene, carbon tetrachloride, etc.) to form the terminal carbon radical. Then, the terminal carbon radical withdraws a hydrogen atom or a chlorine atom from the compound containing an element which is easily radical chain transferred to form a terminal carbon-hydrogen or carbon-chlorine bond. In such treatment, a compound which can capture the liberated iodine (e.g. sodium sulfite, etc.) is preferably used.

The present invention will be illustrated by the following Examples and Comparative Examples.

Comparative Example 1

In a pressure autoclave, $F(CF_2CF_2CF_2O)_nCF_2CF_2I$ (average of n: 27.4, average molecular weight: about 4,800) (5.0 g) and methyl acrylate (MA) (5.0 g) were dissolved in 1,1,2-trichloro-1,2,2-trifluoroethane (R-113) (30 cc). Then, azobisisobutyronitrile (AIBN) ($6.4 \times 10^{-3}$ g) was added. After cooling, the atmosphere was fully replaced with a nitrogen gas. Then, the atmosphere was pressurized to 1.0 $kg/cm^2G$ with the nitrogen gas. The mixture was heated to 70°C with stirring and polymerized for 5 hours. After completion of the polymerization, the autoclave was opened. The content was vacuum distilled at 40°C to remove the solvent and the residual monomer. A yield was measured to be 9.7 g. A resultant polymer had two separated parts which were a transparent oil part and a white resin part.

An IR spectrum of the oil part was measured. As shown in Fig. 1, only peaks based on perfluoropolyether were observed and no peak based on poly-MA (polymethyl acrylate) was observed. A peak at 920 $cm^{-1}$ based on a terminal $-CF_2-I$ group remained at the same intensity as before the reaction. In addition, an IR spectrum of the white resin part was measured. Only peaks based on poly-MA were observed. From this, it is clear that when only MA is used, only a homopolymer of MA is produced and a block polymer with a perfluoropolyether chain is not produced.

Example 1

In a pressure autoclave, $F(CF_2CF_2CF_2O)_nCF_2CF_2I$ (average of n: 27.4, average molecular weight: about 4,800) (20.0 g) and MA (20.0 g) were dissolved in R-113 (120 cc). Then, AIBN ($1.69 \times 10^{-2}$ g) was added. The atmosphere was fully replaced with firstly a nitrogen gas, and then an ethylene gas. Then, the atmosphere was pressurized with the ethylene gas to 14.8 $kg/cm^2G$ at 70°C. The mixture was polymerized at 70°C for 5 hours. Then, AIBN ($1.6 \times 10^{-2}$ g) and MA (20.0 g) were added and the polymerization was continued for 9 hours. After the completion of the polymerization, the autoclave was opened. Although a small part of resultant poly-MA adhered to a wall of the autoclave, a large part of poly-MA was dispersed in R-113. After the content was vacuum dried at 40°C, a yield of the product was measured to be 56.2 g. No separation between an oil part and a resin part was observed.

The resultant polymer was dispersed and dissolved again in R-113 and filtered through a glass filter. A filtrate was vacuum dried at 40°C to obtain a greasy polymer. An IR spectrum of this polymer was measured. As shown in Fig. 2, in addition to peaks based on the perfluoropolyether, peaks based on a copolymer of MA and ethylene were observed at 2,800 $cm^{-1}$, 1,730 $cm^{-1}$, 1,440 $cm^{-1}$ and the like. A peak at 920 $cm^{-1}$ completely disappeared. Accordingly, IBR was 100 %.

From the result, it is seemed that a MA-ethylene random copolymer chain forms a covalent bond with a perfluoropolyether chain and accordingly the polymer was dissolved in R-113 and contained in the filtrate.

Example 2

In a pressure autoclave, $n-C_8F_{17}I$ (1.3 g) and MA (15.0 g) were dissolved in R-113 (100 cc). Then, AIBN ($9.3 \times 10^{-3}$ g) was added. The atmosphere was fully replaced with firstly a nitrogen gas, and then an ethylene gas. Then, the atmosphere was pressurized with the ethylene gas to 30.0 $kg/cm^2G$ at 70°C. The mixture was polymerized at 70°C for 8 hours. Then, the autoclave was opened. After the content was vacuum dried at 40°C, a yield of the product was

measured to be 4.9 g.

R-113 was added to the resultant polymer, and then a R-113-soluble part and a R-113-insoluble part were formed. $^1$H-NMR and $^{19}$F-NMR spectra of each of two parts were measured. In $^{19}$F-NMR spectrum, both of the soluble and insoluble parts had a peak at about 36 ppm (an external standard of trichloroacetic acid) based on $-C\underline{F}_2-CH_2-$ which indicates a covalent bond of a fluorocarbon chain with a hydrocarbon chain. In addition, a composition of the hydrocarbon chain segment and a molecular weight as a whole were determined. The result is shown in Table 1. It is apparent from Table 1 that almost all the hydrocarbon chain consists of MA units.

A peak based on

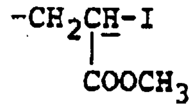

was not observed, although a peak based on $-CH_2C\underline{H}_2I$ was observed at about 3.0 ppm in $^1$H-NMR spectra of the both parts. From this, it is seemed that all ends of the hydrocarbon chain segments are terminated with ethylene units ($-CH_2CH_2I$). The R-113-soluble part have a higher ethylene content than in the insoluble part, since ethylene is introduced in a larger content in the fluorocarbon chain units and the terminal iodine.

Table 1

| | Ethylene unit (% by mole) | MA unit (% by mole) | Molecular weight |
|---|---|---|---|
| R-113-soluble part | 22 | 78 | 1,160 |
| R-113-insoluble part | 13 | 87 | 2,030 |

Comparative Example 2

In a pressure autoclave, $F(CF_2CF_2CF_2O)_nCF_2CF_2I$ (average molecular weight: about 4,800) (7.1 g) and methyl methacrylate (MMA) (7.1 g) were dissolved in perfluorobenzene (20 cc). Then, AIBN ($2.02 \times 10^{-2}$ g) was added. The atmosphere was fully replaced with a nitrogen gas and then pressurized to about 1 kg/cm$^2$G with the nitrogen gas. The mixture was heated to 80°C with stirring and then polymerized for 5 hours. After the completion of the polymerization, the autoclave was opened and the content was vacuum dried at 40°C. A yield was measured to be 12.1 g. A resultant polymer had two separated parts which were a transparent oil part and a white resin part.

An IR spectrum of each of the oil and resin parts was measured. Only peaks based on the perfluoropolyether were observed in the oil part and only peaks based on poly-MMA were observed in the resin part. The transparent oil part had a peak at 920 cm$^{-1}$ which had the same intensity as before the polymerization. It was found that when MMA alone is used, only a homopolymer of MMA is produced and a block polymer with a perfluoropolyether chain is not produced.

Example 3

In a pressure autoclave, $F(CF_2CF_2CF_2O)_nCF_2CF_2I$ (average molecular weight: about 4,800) (15.0 g) and MMA (15.0 g) were dissolved in R-113 (90 cc). Then, AIBN ($9.6 \times 10^{-3}$ g) was added. The atmosphere was fully replaced with firstly a nitrogen gas, and then an ethylene gas. Then, the atmosphere was pressurized with the ethylene gas to 32.0 kg/cm$^2$G at 70°C. The mixture was polymerized at 70°C. MMA (totally 45.2 g) and AIBN (totally $2.91 \times 10^{-2}$ g) were added depending on the consumption of these in the course of the polymerization. After the polymerization for 45 hours, the autoclave was opened. Although a small part of a product adhered to a wall of the autoclave, resultant poly-MMA was dispersed in R-113. After the content was vacuum dried at 40°C, a yield of the product was measured to be 80.3 g. No separation of an oil part from a resin part was observed.

The resultant polymer was dispersed and dissolved again in R-113 and filtered through a glass filter. A filtrate was vacuum dried at 40°C to obtain a greasy polymer. An IR spectrum of this polymer was measured. As shown in Fig. 3, in addition to peaks based on the perfluoropolyether, peaks based on a copolymer of MMA and ethylene were observed at 2,800 cm$^{-1}$, 1,730 cm$^{-1}$, 1,480 cm$^{-1}$, 1,440 cm$^{-1}$ and the like. A peak at 920 cm$^{-1}$ completely disappeared. Accordingly, a block ratio (IBR) was 100 %.

Prom the result, it is seemed that a MMA-ethylene random copolymer chain forms a covalent bond with a perfluoropolyether chain and, accordingly, the polymer is dissolved in R-113 and contained in the filtrate.

Example 4

In a pressure autoclave, an iodine-double-terminated rubber dispersion based on vinylidene fluoride (VdF)/hexafluoropropylene (HFP)/tetrafluoroethylene (TFE) (molar ratio: 55/19/26) (average molecular weight: 18,000) (300 g) (solid content: 6 % by weight) was charged. Then, MMA (0.7 g), ammonium perfluorooctanoate salt (1.5 g) and $(CH_3)_3CCOOH$ (5.96 g x $10^{-2}$) were added. The atmosphere was fully replaced with firstly nitrogen and then ethylene. The atmosphere was pressurized with ethylene to 27.0 kg/cm$^2$G at 140 °C. Then, the polymerization was continued for 30 hours at 140 °C, while MMA (totally 44.8 g) which was fully bubbled with a nitrogen gas was continuously added. After the completion of the polymerization, the product was coagulated with potash alum and subjected to GPC. It was found that the rubbery polymer before the polymerization had a number average molecular weight of 18,000 and a molecular weight distribution of 1.29, and the resinous polymer after the polymerization had a number average molecular weight of 28,000 and a molecular weight distribution of 1.28. This shows that the molecular weight distribution is constant and only the molecular weight increases. It is seemed that the MMA and ethylene monomers additinally polymerize with a terminal carbon radical which is formed by a carbon-iodine bond cleavage at an end of the fluorine-containing polymer chain, and the cleavage and the monomer addition occur again, even when the polymer end is terminated with the iodine atom by drawing the iodine atom and that, accordingly the polymerization proceeds livingly.

Example 5

In a pressure autoclave, $F(CF_2CF_2CF_2O)_nCF_2CF_2I$ (average molecular weight: about 4,800) (5.0 g), MA (2.0 g) and 1-hexene (4.6 g) were dissolved in R-113 (30 cc). Then, AIBN (9.7 x $10^{-3}$ g) was added. The atmosphere was fully replaced with a nitrogen gas and then pressurized with the nitrogen gas to about 1 kg/cm$^2$G. After heating to 70°C, the mixture was polymerized for 7.9 hours. After the completion of the polymerization, the content was vacuum dried at 40°C. A yield of the product was measured to be 5.9 g.

Although the resultant polymer was brownish because of the liberation of the terminal iodine atom, it was a greasy polymer having high transparency. An IR spectrum of the polymer was measured. As shown in Fig. 4, both of peaks based on the perfluoropolyether chain and peaks based on the hydrocarbon polymer chain (a random polymer chain of MA and 1-hexene) were observed. A peak at 920 cm$^{-1}$ based on $-CF_2-I$ completely disappeared. Namely, IBR was 100 %.

In addition, an NMR spectrum of this polymer was measured. In the $^{19}$F-NMR spectrum, the polymer had a peak at about 40 ppm (an external standard of trichloroacetic acid) based on $-C\underline{F}_2-CH_2-$, which confirmed a covalent bond of a fluorocarbon chain with a hydrocarbon chain. The $^1$H-NMR spectrum showed that a ratio of the MA units to the 1-hexene units in the hydrocarbon chain is 62:38 (molar ratio) and the MA units are contained in larger amount than the 1-hexene units. A peak based on $-CH_2C\underline{H}(COOCH_3)-I$ at about 4.4 ppm and a peak based on $-CH_2C\underline{H}(C_4H_9)-I$ at about 3.2 ppm were observed.

The above result shows that the polymerization gives a block polymer which has a perfluoropolyether chain and a copolymer chain consisting of MA and 1-hexene with a large amount of MA.

An experiment confirmed that a ratio of MA to 1-hexene in the polymer can be controlled by addition amount of 1-hexene.

Example 6

In a pressure autoclave, an iodine-double-terminated liquid rubber based on VdF/HFP/TFE (molar ratio: 52/21/27) (25.0 g), MA (24.4 g) and 1-hexene (25.0 g) were dissolved in R-113 (150 cc). Then, AIBN (6.42 x $10^{-2}$ g) was added. The atmosphere was fully replaced with a nitrogen gas and then pressurized with the nitrogen gas to about 1 kg/cm$^2$G. The mixture was heated to 70°C. The polymerization was conducted while the monomers and the initiator [MA (totally 42.2 g), 1-hexene (totally 26.8 g) and AIBN (totally 0.14 g)] were added in the course of the polymerization. After the completion of the polymerization, the autoclave was opened. The polymer was dissolved in the solvent to form a homogeneous transparent solution before the polymerization, but an opaque liquid was formed after the polymerization. The content was vacuum dried at 40°C to give a resinous polymer having a high transparency. GPC analysis was conducted with this resultant polymer and also a polymer which was sampled after 8 hours from the initiation of the polymerization. The result is shown in Table 2. This shows that, although the molecular weight after the polymerization was at least twice before the polymerization, the molecular weight distribution was almost the same. It is confirmed that a carbon-iodine bond is cleaved at an end of the fluorine-containing polymer chain, and the polymerization proceeds livingly from a carbon free radical and that a block polymer consisting of a fluorine-containing polymer chain and a hydrocarbon polymer chain is produced.

Table 2

| | $M_n$ | $M_w$ | $M_w/M_n$ |
|---|---|---|---|
| Before reaction | 4,200 | 5,200 | 1.23 |
| After 8 hour reaction | 6,500 | 8,200 | 1.25 |
| After 16 hour reaction | 8,500 | 11,300 | 1.32 |

Example 7

In a pressure autoclave, $F(CF_2CF_2CF_2O)_nCF_2CF_2I$ (average of n: 20, average molecular weight: about 3,700) (40.0 g), acrylic acid (AA) (22.5 g) and 1-hexene (26.3 g) were dissolved in R-113 (240 cc). Then, AIBN ($7.59 \times 10^{-2}$ g) was added. The atmosphere was fully replaced with a nitrogen gas and then pressurized with the nitrogen gas to about 1 $kg/cm^2G$. After heating to 70°C with stirring, the mixture was polymerized for 8.0 hours. After the completion of the polymerization, the autoclave was opened. The content was vacuum dried at 40°C. A yield of the product was measured to be 54.56 g.

An IR spectrum of the polymer was measured. As shown in Fig. 5, peaks based on a copolymer of AA and 1-hexene were also observed at 3,100 $cm^{-1}$, 1,710 $cm^{-1}$, 1,450 $cm^{-1}$ and the like in addition to peaks based on the perfluoropolyether chain. A peak at 920 $cm^{-1}$ completely disappeared.

When the resultant polymer was extracted with R-113, an insoluble part was a powdery polymer. This powdery polymer (2.0 g) was dispersed in water (100 cc) and then NaOH was added to adjust a pH value to 7. The whole system had an increased viscosity and an opaque state turned to a transparent state.

This polymer was dried and its IR spectrum was measured. As shown in Fig. 6, peaks based on a copolymer of sodium acrylate (AANa) and 1-hexene were observed at 3,350 $cm^{-1}$, 2,900 $cm^{-1}$, 1,560 $cm^{-1}$ and the like in addition to peaks based on the perfluoropolyether chain. No peak at 920 $cm^{-1}$ was observed. In addition, an NMR spectrum of this polymer was measured. In the $^{19}F$-NMR spectrum, a peak based on $-C\underline{F}_2-CH_2-$ was observed at 39 ppm. The $^1H$-NMR spectrum showed that a ratio of AANa units to 1-hexene units in the hydrocarbon chain segment is 75:24 (molar ratio) and the AANa is contained in larger amount than 1-hexene. The above result shows that the polymerization gives a water-soluble fluorine-containing block polymer which has a perfluoropolyether chain and a hydrocarbon polymer chain consisting of AANa units and 1-hexene units.

An experiment confirmed that a ratio of AA to 1-hexene in the polymer can be controlled by an addition amount of 1-hexene.

IBR in this Example was determined as follows:

Since, in the IR spectrum, a peak at 1,100 $cm^{-1}$ (probably based on an ether linkage of the perfluoropolyether) is constant before and after the polymerization, this peak is considered as a standard.

Before the reaction, the iodine-terminated perfluoropolyether has the absorbance at 1,100 $cm^{-1}$ of 1.434 [= ln (75.5/18)] and the absorbance at 920 $cm^{-1}$ of 0.158 [= ln(82/70)].

After the reaction, the absorbance at 1,100 $cm^{-1}$ in the IR spectrum is 1.609 [= ln(77.5/15.5)] and the absorbance at 920 $cm^{-1}$ is 0.065 [= ln(79.5/74.5)].

Accordingly, a ratio of unreacted terminal carboniodine bonds after the reaction is calculated as follows:

$$\frac{\text{Number of carbon-iodine bonds after the reaction}}{\text{Number of carbon-iodine bonds before the reaction}} =$$

$$\frac{\text{Intensity of peak at 920 cm}^{-1}\text{ after the reaction}}{\text{Intensity of peak at 920 cm}^{-1}\text{ before the reaction}} =$$

$$\frac{\text{Absorbance of peak at 920 cm}^{-1}\text{ after the reaction}}{\text{Absorbance of peak at 1,100 cm}^{-1}\text{ after the reaction}} +$$

$$\frac{\text{Absorbance of peak at 920 cm}^{-1}\text{ before the reaction}}{\text{Absorbance of peak at 1,100 cm}^{-1}\text{ before the reaction}} =$$

$$\frac{|\ln(79.5/74.5)|}{|\ln(77.5/15.5)|} + \frac{|\ln(82/70)|}{|\ln(75.5/18)|} = \frac{|0.065|}{|1.609|} + \frac{|0.158|}{|1.434|}$$

$$= 0.37$$

A ratio of the peak at 920 $cm^{-1}$ decreased by the reaction, namely a ratio of the carbon-iodine bonds which connect with the hydrocarbon chain segment by the reaction, namely IBR is calculated to be (1-0.37) x 100 = 63 %.

Comparative Example 3

In a pressure Pyrex autoclave, $F(CF_2CF_2CF_2O)_n-CF_2CF_2I$ (average molecular weight: about 4,800) (5.0 g) and acrylonitrile (AN) (4.2 g) were dissolved in R-113 (30 cc). Then, a solution of sodium sulfite (0.10 g) in water (5 cc) was added. The atmosphere was fully replaced with a nitrogen gas and then pressurized to about 1 $kg/cm^2G$ with the nitrogen gas. The mixture was polymerized at 70°C for 8 hours while irradiating UV light. After completion of the polymerization, the autoclave was opened. The content was removed and vacuum dried at 40°C. A yield was measured to be 9.1 g. But an oil part was separated from a resultant resinous polymer.

An IR spectrum of the separated oil part was measured. Only peaks based on a perfluoropolyether chain were observed, but peaks based on poly-AN chain were hardly observed. A peak at 920 $cm^{-1}$ after the polymerization had almost the same intensity as before the polymerization.

An IR spectrum of the resinous part was measured. Only peaks based on the poly-AN were observed, but peaks based on the perfluoropolyether chain were not observed. The result shows that when AN alone is used, only a homopolymer of AN is produced and a block polymer with the perfluoropolyether chain is not produced.

Example 8

In a pressure quartz autoclave, $F(CF_2CF_2CF_2O)_n-CF_2CF_2I$ (average molecular weight: ____) (3.0 g), AN (1.3 g) and 1-hexene (4.6 g) were dissolved in R-113 (30 cc). Then, a solution of sodium sulfite) (0.1 g) in water (5 cc) was added. The atmosphere was fully replaced with a nitrogen gas and then pressurized with the nitrogen gas to about 1 $kg/cm^2G$. The mixture was polymerized at 70 °C for 8.0 hours while irradiating UV light in which light having a wave length of not longer than 240 nm was cut by a fitter. After the completion of the polymerization, the content was vacuum dried at 40°C to obtain a slightly opaque and oily polymer. A yield of the product was measured to be 5.4 g.

Art IR spectrum of the resultant polymer was measured. Peaks based on a hydrocarbon random polymer consisting of the AN and 1-hexene units were observed at 2,900 $cm^{-1}$, 2,250 $cm^{-1}$, 1,440 $cm^{-1}$ and the like in addition to peaks based on the perfluoropolyether chain. A peak at 920 $cm^{-1}$ completely disappeared. In addition, an NMR spectrum of the polymer was measured. In the $^{19}F$-NMR spectrum, a peak based on $-\underline{C}F_2-CH_2-$ was observed at about 38 ppm (an external standard of trichloroacetic acid). The $^1H$-NMR spectrum showed that a ratio of AN units to 1-hexene units in the hydrocarbon chain is 39:61 (molar ratio).

It was confirmed that the polymerization gives a block polymer which has a perfluoropolyether chain and a hydrocarbon polymer chain consisting of AN units and 1-hexene units.

An experiment confirmed that a ratio of AN to 1-hexene in the polymer can be controlled by an addition amount of 1-hexene.

Example 9

In a pressure Pyrex autoclave, a block copolymer having a terminal iodine bond prepared in Example 5 (2.5 g) and isopentane (3.0 g) were dissolved in R-113 (15 cc). Then, a solution of sodium sulfite (0.1 g) in water (5 cc) was added. The atmosphere was fully replaced with a nitrogen gas and then pressurized with the nitrogen gas to about 1 $kg/cm^2G$. A polymer terminal was stabilized at 70°C for 8.0 hours while irradiating UV light. After the completion of the stabilization, the content was washed with water. Then, the solution in R-113 was vacuum dried at 40°C. The resultant polymer was greasy and highly transparent one. An elemental analysis was conducted. The, polymer had an iodine content of not more than 0.01 % by weight and iodine could be removed from the polymer by this reaction. Even when the polymer was subjected to sunlight in the air, a color of the polymer did not change to brown. The reaction gave a block polymer a terminal of which is stabilized by hydrogen.

Example 10

Each of R-113-soluble parts prepared in Examples 1 and 3 (namely, a block polymer having a perfluoropolyether chain and a hydrocarbon polymer chain which contains a large amount of MA units, and a block polymer having a perfluoropolyether chain and a hydrocarbon polymer chain which contains a large amount of MMA units) in different ratios was added to an about 4 % solution of poly-MMA (molecular weight: about 600,000) in acetone.

After poly-MMA and block poly-MMA were homogeneously dispersed and dissolved in acetone, a solution was cast on a glass plate and acetone was evaporated to obtain a homogeneous, highly transparent and smooth film. An oil or water droplet was dropped on this film to measure a contact angle. The result is shown in Fig. 8.

This result shows that when ratios of both MA-based and MMA-based block polymers to poly-MMA are increased, the contact angle increases, but when the ratios reach certain values, the contact angle does not further increase. This may be because the block polymer gives good water- and oil-repellency to the film since the hydrocarbon polymer chain of the block polymer enters in poly-MMA phase due to its compatibility with poly-MMA and the perfluoropolyether chain, which is the other component of the block polymer, appears on a surface part of the film (anchor effect).

In the same manner as described above for the block polymer, the perfluoropolyether (molecular weight: about 4500) was mixed with poly-MMA in an acetone solvent and cast on a glass plate. The perfluoropolyether floated on poly-MMA and a homogeneous film containing a fluoropolymer chain could not be obtained.

Example 11

A block polymer prepared in Example 7 and having a pefluoropolyether chain and a hydrocarbon polymer chain which contains a large amount of acrylic acid units was added in various ratios to water to measure a surface tension of an aqueous solution. The result is shown in Fig. 9.

The result shows that when the content of the block polymer in the aqueous solution is increased, the surface tension decreases to 35 dyn/cm. Fig. 9 shows that a critical micelle concentration is about $1 \times 10^{-3}$ mol/l.

From this, it is confirmed that the block polymer consisting of the flexible fluoropolymer chain and the water-soluble hydrocarbon polymer chain effectively decreases the surface tension of water.

## Claims

**1.** A process for preparing a polymer which comprises

polymerizing at least one monomer $M_1$, having a radically polymerizable unsaturated bond, in the presence of a monomer $M_2$, which is different from said monomer $M_1$, a radical generating source and an iodide compound having a cleavable carbon-iodine bond and capable of producing a carbon radical and an iodine atom upon cleavage, to form at least one polymer chain between said carbon radical and said iodine atom,
wherein said monomer $M_2$ has a larger addition reactivity with said carbon radical than said monomer $M_1$, and a copolymerization reaction rate $r_2$ of substantially zero, and
wherein said monomer $M_1$ has a copolymerization reaction rate $r_1$ greater than 1 and less than 100.

**2.** The process according to claim 1, wherein said iodine atom of said iodine compound is withdrawn by a radical of said $M_2$ monomer to form a terminal iodide bond between said $M_2$ monomer radical and said iodine atom, said iodine atom of said terminal iodide bond having substantially the same chain transfer reactivity as said iodine atom when bonded to said iodide compound.

**3.** A process for preparing a polymer which comprises

polymerizing at least one monomer $M_1$, having a radically polymerizable unsaturated bond, in the presence of a monomer $M_2$, which is different from said monomer $M_1$, a radical generating source and an iodine compound having a cleavable carbon-iodine bond and capable of producing a carbon radical and an iodine atom upon cleavage, to form at least one polymer chain between said carbon radical and said iodine atom,
wherein said monomer $M_2$ has a larger addition reactivity with said carbon radical than said monomer $M_1$, and a copolymerization reaction rate $r_2$ of smaller than 2, and
wherein said iodine atom of said iodine compound may be withdrawn by a radical of said $M_2$ monomer to form a terminal iodide bond between said $M_2$ monomer radical and said iodine atom, said iodine atom of said terminal iodide bond having substantially the same chain transfer reactivity as said iodine atom when bonded to said iodine compound.

**4.** The process according to any one of the claims 1 to 3, wherein said monomer $M_2$ is an $\alpha$-olefin.

**5.** The process according to any one of the claims 1 to 4, wherein said monomer $M_1$ is a radically polymerizable unsaturated hydrocarbon.

**6.** The process according to any one of the claims 1 to 4, wherein said monomer $M_1$ is an acrylic unsaturated compound.

7. The process according to any one of the claims 1 to 6, wherein said iodide compound is a fluorine-containing iodide compound.

8. The process according to any one of the claims 1 to 6, wherein said iodide compound is a low molecular weight perfluorinated alkyl iodide.

9. The process according to any one of the claims 1 to 6, wherein said iodide compound is an iodine-containing fluoropolymer.

10. The process according to any one of the claims 1 to 9, which further comprises a step for converting a terminal carbon-iodine bond of the produced polymer to a carbon-hydrogen bond.

**Patentansprüche**

1. Ein Verfahren zur Herstellung eines Polymeren, umfassend die Polymerisation mindestens eines Monomeren $M_1$, das eine radikalpolymerisierbare ungesättigte Bindung enthält, in Gegenwart eines Monomeren $M_2$, das verschieden ist von dem genannten Monomer $M_1$, eines ein Radikal erzeugenden Ausgangsstoffs und einer Iodidverbindung, die eine spaltbare Kohlenstoff-Iod-Bindung enthält und fähig ist, nach der Spaltung ein Kohlenstoffradikal und ein Iodatom zu erzeugen, um mindestens eine Polymerkette zwischen dem genannten Kohlenstoffatom und dem genannten Iodatom zu bilden,

   worin das genannte Monomer $M_2$ eine größere Additionsreaktivität mit dem Kohlenstoffradikal als das genante Monomer $M_1$ und eine Copolymerisationsreaktionsgeschwindigkeit $r_2$ von praktisch Null aufweist, und
   worin das genannte Monomer $M_1$ eine Copolymerisationsreaktionsgeschwindigkeit $r_1$ von mehr als 1 und von weniger als 100 aufweist.

2. Das Verfahren gemäß Anspruch 1, worin das genannte Iodatom der genannten Iodverbindung durch ein Radikal des genannten Momomeren $M_2$ abgezogen wird, um eine terminale Iodidbindung zwischen dem genannten $M_2$-Monomerradikal und dem genannten Iodatom zu bilden, wobei das genannte Iodatom der genannten terminalen Iodidbindung im wesentlichen die gleiche Kettentransferreaktivität aufweist wie das genannte Iodatom, wenn es an die genannte Iodidverbindung gebunden ist.

3. Ein Verfahren zur Herstellung eines Polymeren, umfassend die Polymerisation mindestens eines Monomeren $M_1$, das eine radikalpolymerisierbare ungesättigte Bindung enthält, in Gegenwart eines Monomeren $M_2$, das verschieden ist vom genannten Monomer $M_1$, eines ein Radikal erzeugenden Ausgangsstoffs und einer Iodverbindung, die eine spaltbare Kohlenstoff-Iod-Bindung enthält und fähig ist, nach der Spaltung ein Kohlenstoffradikal und ein Iodatom zu erzeugen, um mindestens eine Polymerkette zwischen dem genannten Kohlenstoffradikal und dem genannten Iodatom zu bilden,

   worin das genannte Monomer $M_2$ eine größere Additionsreaktivität mit dem genannten Kohlenstoffradikal als das genannte Monomer $M_1$ und eine Copolymerisationsreaktionsgeschwindigkeit $r_2$, die kleiner ist als 2, aufweist, und
   worin das genannte Iodatom der genannten Iodverbindung durch ein Radikal des genannten Momomeren $M_2$ abgezogen werden kann, um eine terminale Iodidbindung zwischen dem genannten $M_2$-Monomerradikal und dem genannten Iodatom zu bilden, und das genannte Iodatom der genannten terminalen Iodidbindung im wesentlichen die gleiche Kettentransferreaktivität aufweist wie das genannte Iodatom, wenn es an die genannte Iodverbindung gebunden ist.

4. Das Verfahren gemäß jedem der Ansprüche 1 bis 3, worin das gennante Monomer $M_2$ ein $\alpha$-Olefin ist.

5. Das Verfahren gemäß jedem der Ansprüche 1 bis 4, worin das genannte Monomer $M_1$ ein radikalpolymerisierbarer ungesättigter Kohlenwasserstoff ist.

6. Das Verfahren gemäß jedem der Ansprüche 1 bis 4, worin dasgenannte Monomer $M_1$ eine acrylisch ungesättigte Verbindung ist.

7. Das Verfahren gemäß jedem der Ansprüche 1 bis 6, worin die genannte Iodidverbindung eine fluorhaltige Iodidverbindung ist.

8. Das Verfahren gemäß jedem der Ansprüche 1 bis 6, worin die genannte Iodidverbindung ein perfluoriertes Alkyliodid mit niedrigem Molekulargewicht ist.

9. Das Verfahren gemäß jedem der Ansprüche 1 bis 6, worin worin die genannte Iodidverbindung ein iodhaltiges Fluorpolymer ist.

10. Das Verfahren gemäß jedem der Ansprüche 1 bis 9, welches ferner eine Stufe zur Überführung einer terminalen Kohlenstoff-Iod-Bindung des hergestellten Polymers in eine Kohlenstoff-Wasserstoffbindung umfaßt.

**Revendications**

1. Procédé pour la préparation d'un polymère qui comprend la polymérisation d'au moins un monomère $M_1$, ayant une liaison insaturée polymérisable par voie radicalaire, en présence d'un monomère $M_2$, qui est différent dudit monomère $M_1$, d'une source génératrice de radicaux et d'un composé iodure ayant une liaison carbone-iode clivable et qui est capable de produire un radical carboné et un atome d'iode par clivage, pour former au moins une chaîne de polymère entre ledit radical carboné et ledit atome d'iode,

   dans lequel ledit monomère $M_2$ a une réactivité d'addition plus grande avec ledit radical carboné que ledit monomère $M_1$, et une vitesse de réaction de copolymérisation $r_2$ de substantiellement zéro, et
   dans lequel ledit monomère $M_1$ a une vitesse de réaction de copolymérisation $r_1$ supérieure à 1 et inférieure à 100.

2. Procédé selon la revendication 1, dans lequel ledit atome d'iode dudit composé d'iodure est retiré par un radical dudit monomère $M_2$ pour former une liaison terminale iodure entre ledit radical du monomère $M_2$ et ledit atome d'iode, ledit atome d'iode de ladite liaison iodure terminale ayant substantiellement la même réactivité de transfert de chaîne que ledit atome d'iode lorsqu'il est lié audit composé iodure.

3. Procédé pour la préparation d'un polymère qui comprend la polymérisation d'au moins un monomère $M_1$, ayant une liaison insaturée polymérisable par voie radicalaire, en présence d'un monomère $M_2$, qui est différent dudit monomère $M_1$, d'une source génératrice de radicaux et d'un composé d'iodure ayant une liaison carbone-iode clivable et capable de produire un radical carboné et un atome d'iode par clivage, pour former au moins une chaîne de polymère entre ledit radical carboné et ledit atome d'iode,

   dans lequel ledit monomère $M_2$ a une réactivité d'addition plus grande avec ledit radical carboné que ledit monomère $M_1$, et une vitesse de réaction de copolymérisation $r_2$ inférieure à 2, et
   dans lequel ledit atome d'iode dudit composé iodure peut être retiré par un radical dudit monomère $M_2$ pour former une liaison iodure terminale entre ledit radical du monomère $M_2$ et ledit atome d'iode, ledit atome d'iode de ladite liaison iodure terminale ayant substantiellement la même réactivité de transfert de chaîne que ledit atome d'iode quand il est lié audit composé iodure.

4. Procédé selon l'une quelconque des revendications 1 à 3, dans lequel ledit monomère $M_2$ est une $\alpha$-oléfine.

5. Procédé selon l'une quelconque des revendications 1 à 4, dans lequel ledit monomère $M_1$ est un hydrocarbure insaturé polymérisable par voie radicalaire.

6. Procédé selon l'une quelconque des revendications 1 à 4, dans lequel ledit monomère $M_1$ est un composé insaturé acrylique.

7. Procédé selon l'une quelconque des revendications 1 à 6, dans lequel ledit composé iodure est un composé iodure qui contient du fluor.

8. Procédé selon l'une quelconque des revendications 1 à 6, dans lequel ledit composé iodure est un iodure d'alkylperfluoré à bas poids moléculaire.

9. Procédé selon l'une quelconque des revendications 1 à 6, dans lequel ledit composé iodure est un fluoropolymère

qui contient l'iode.

10. Procédé selon l'une quelconque des revendications 1 à 9, qui comprend en plus une étape pour la conversion d'une liaison carbone-iode terminale du polymère préparé en une liaison carbone-hydrogène.

Fig. 1

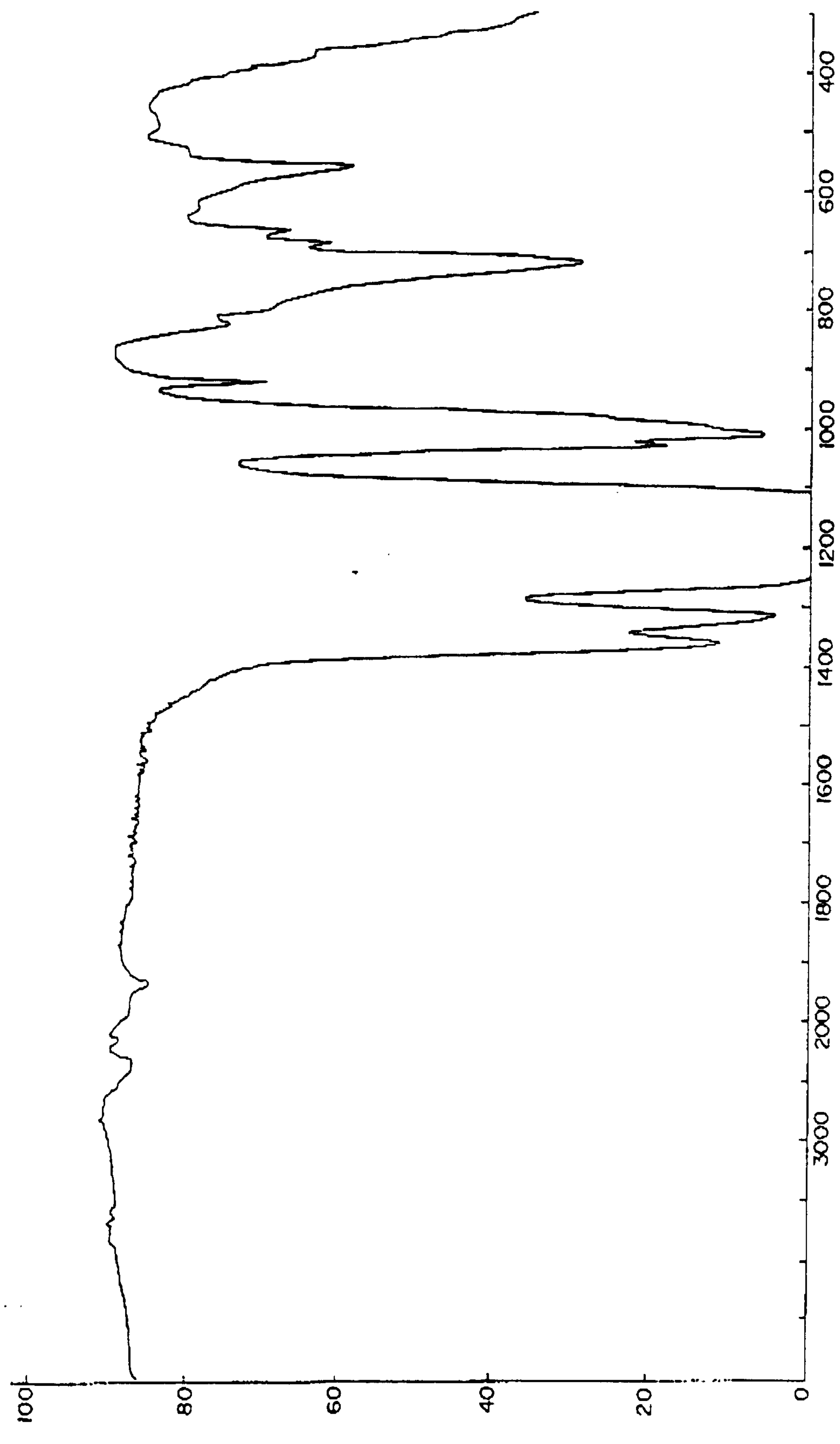

Fig. 2

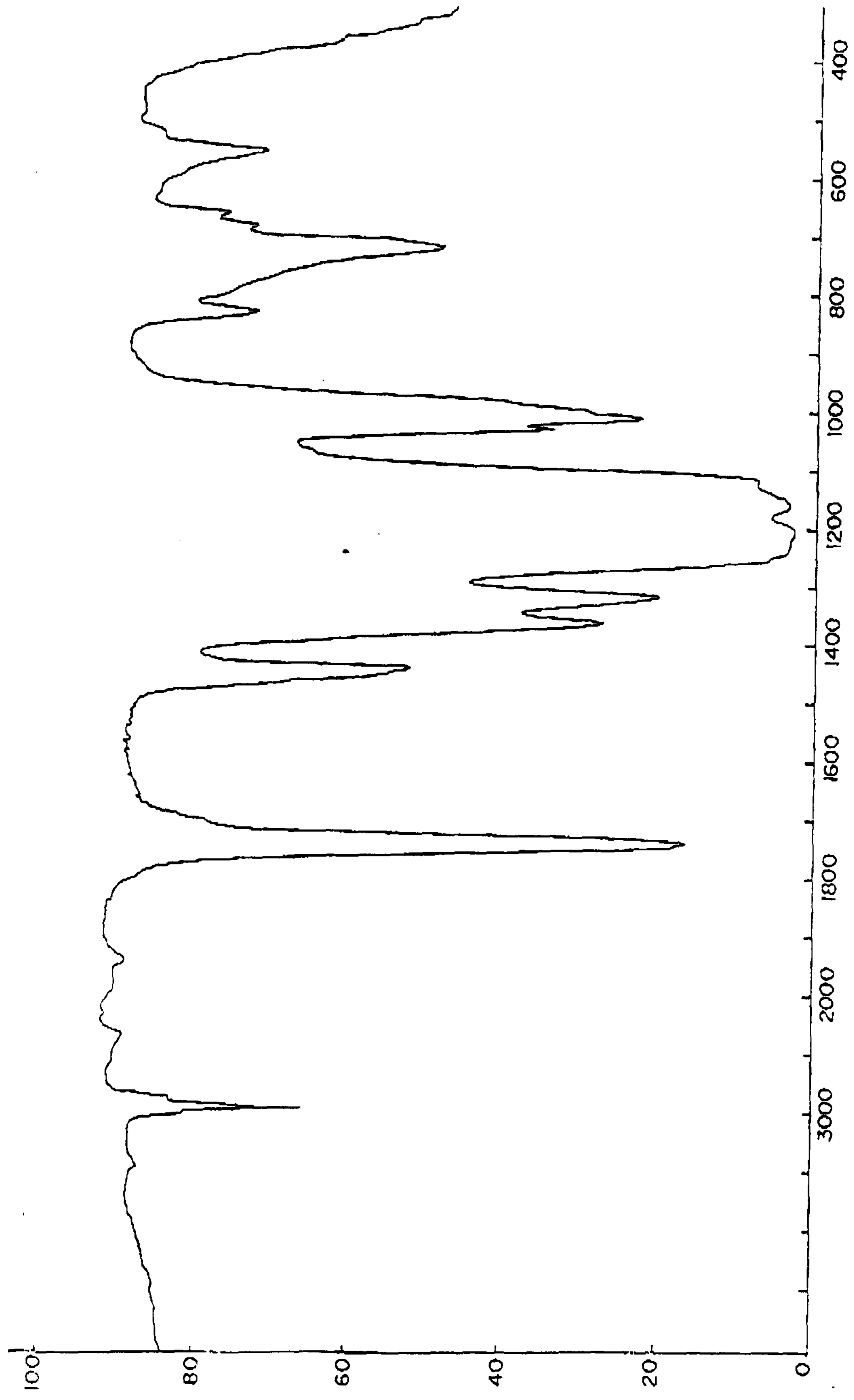

Fig. 3

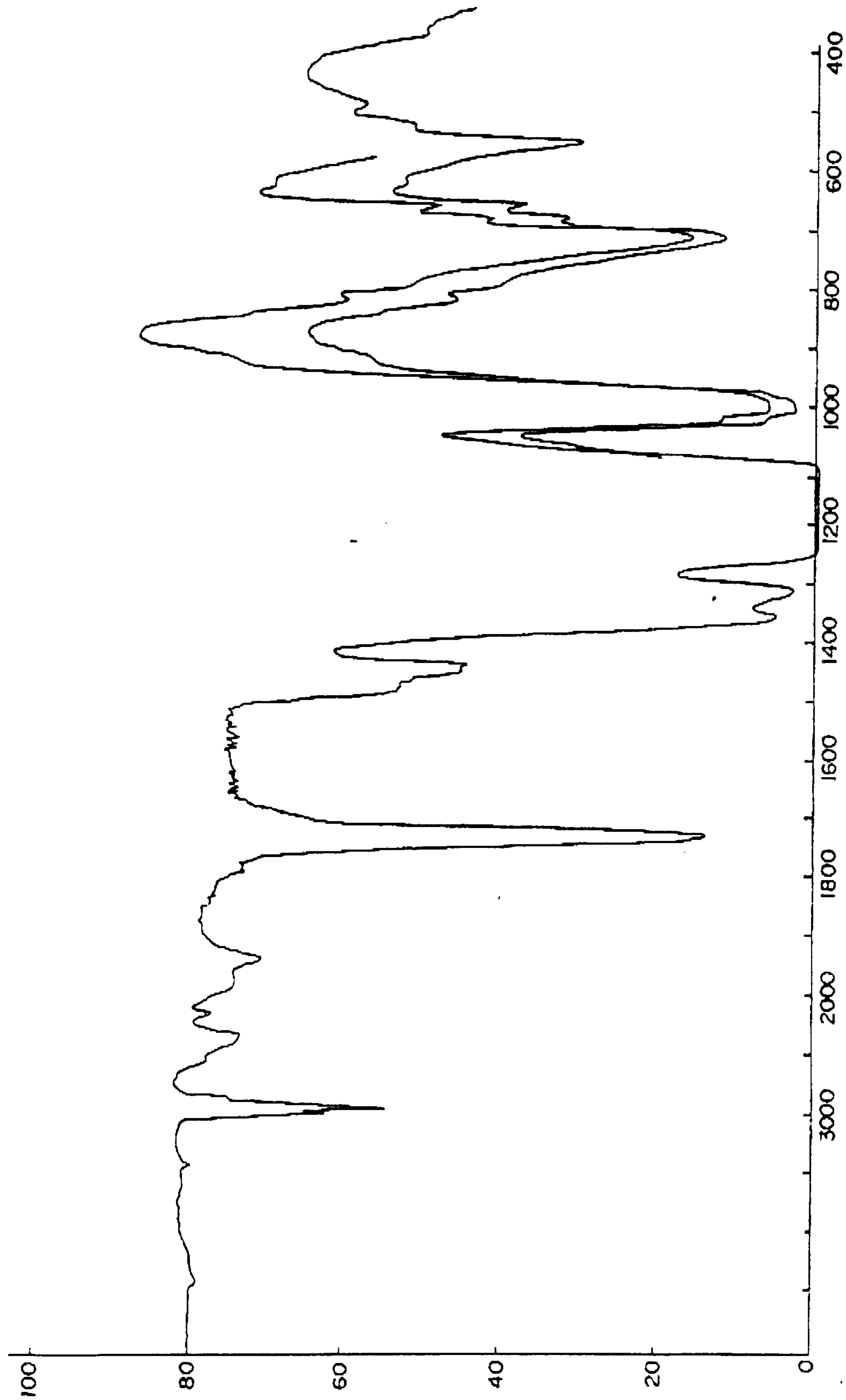

Fig. 4

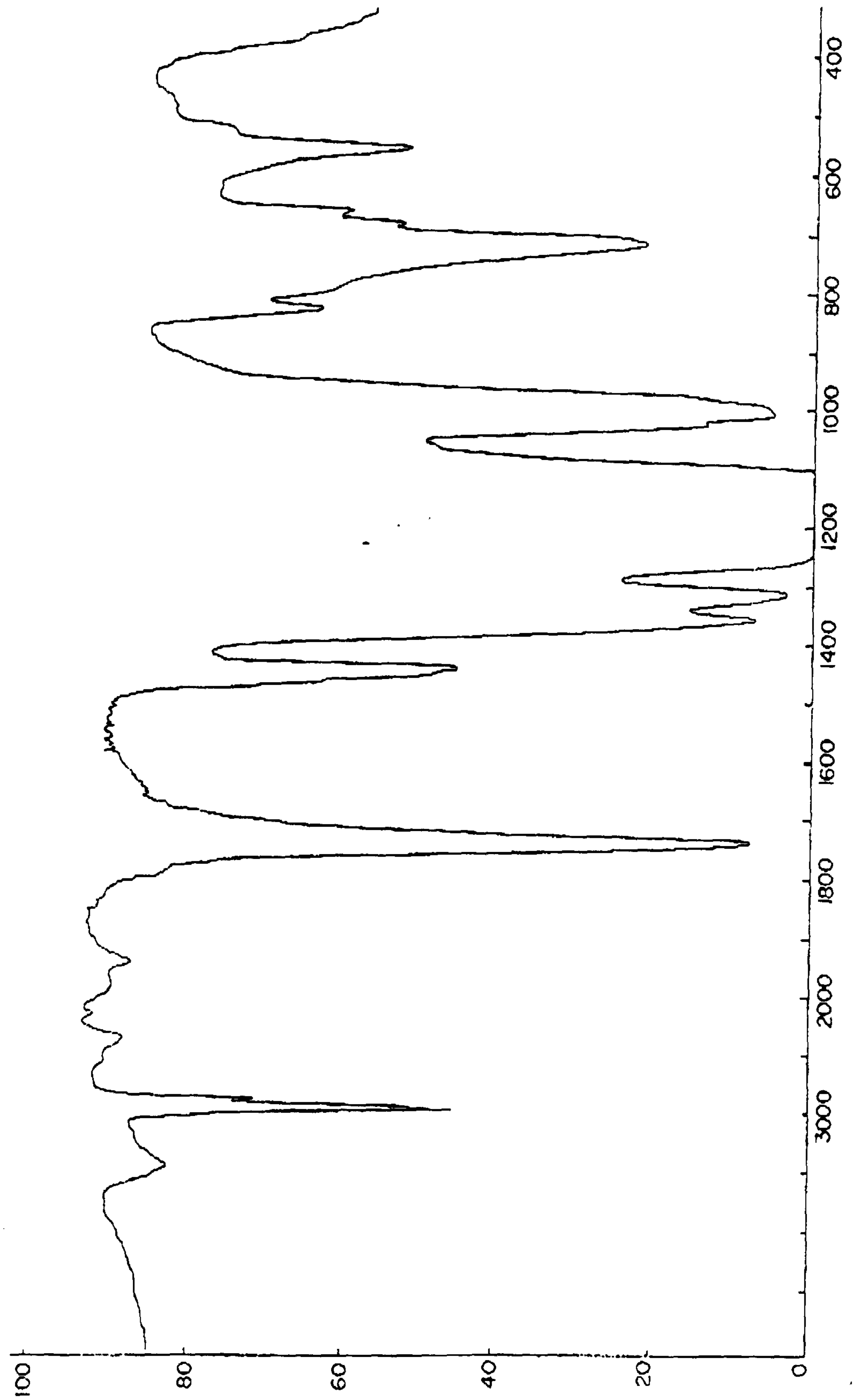

Fig. 5

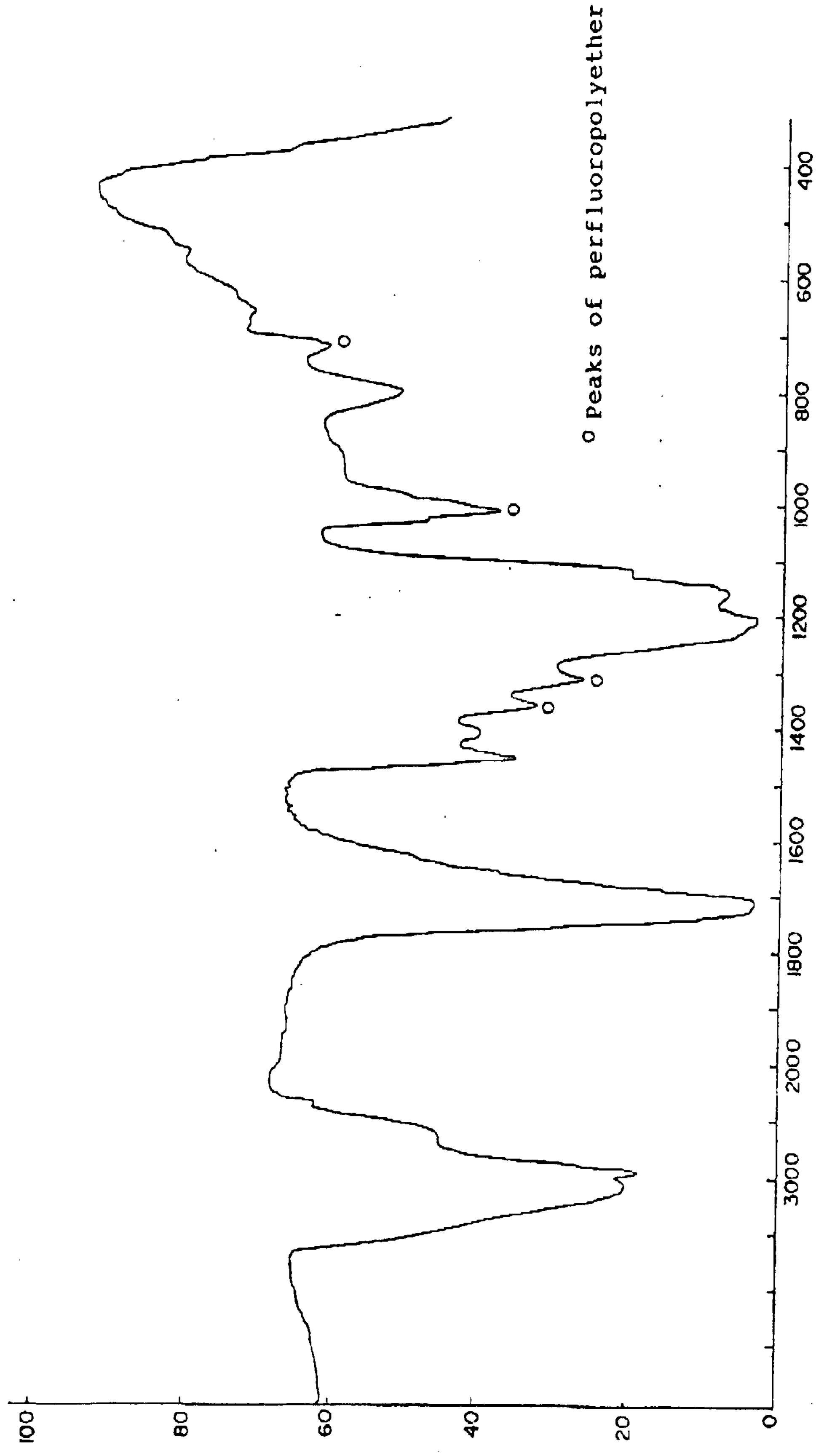
o Peaks of perfluoropolyether
400
600
800
1000
1200
1400
1600
1800
2000
3000
100
80
60
40
20
0

Fig. 6

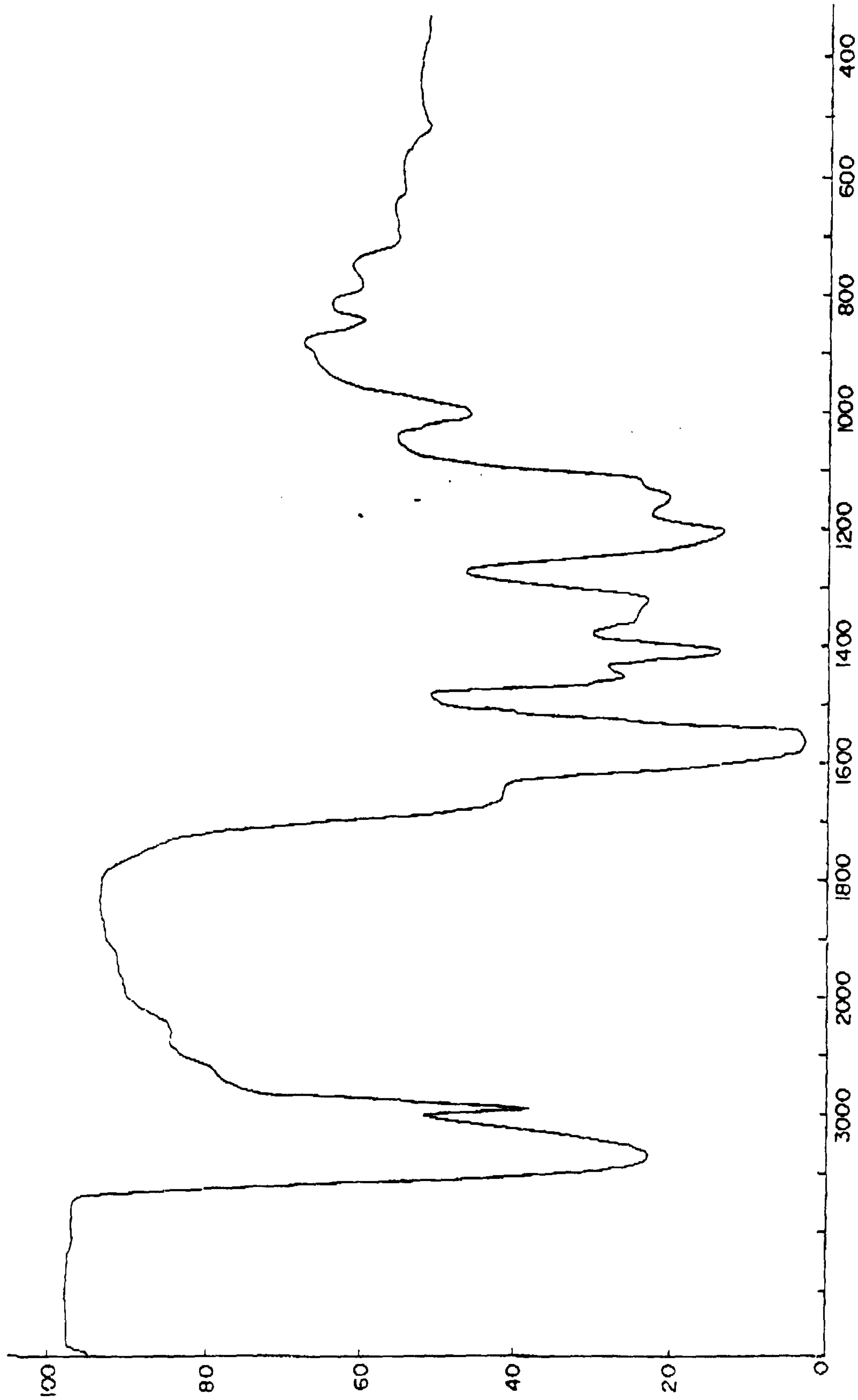

Fig. 7

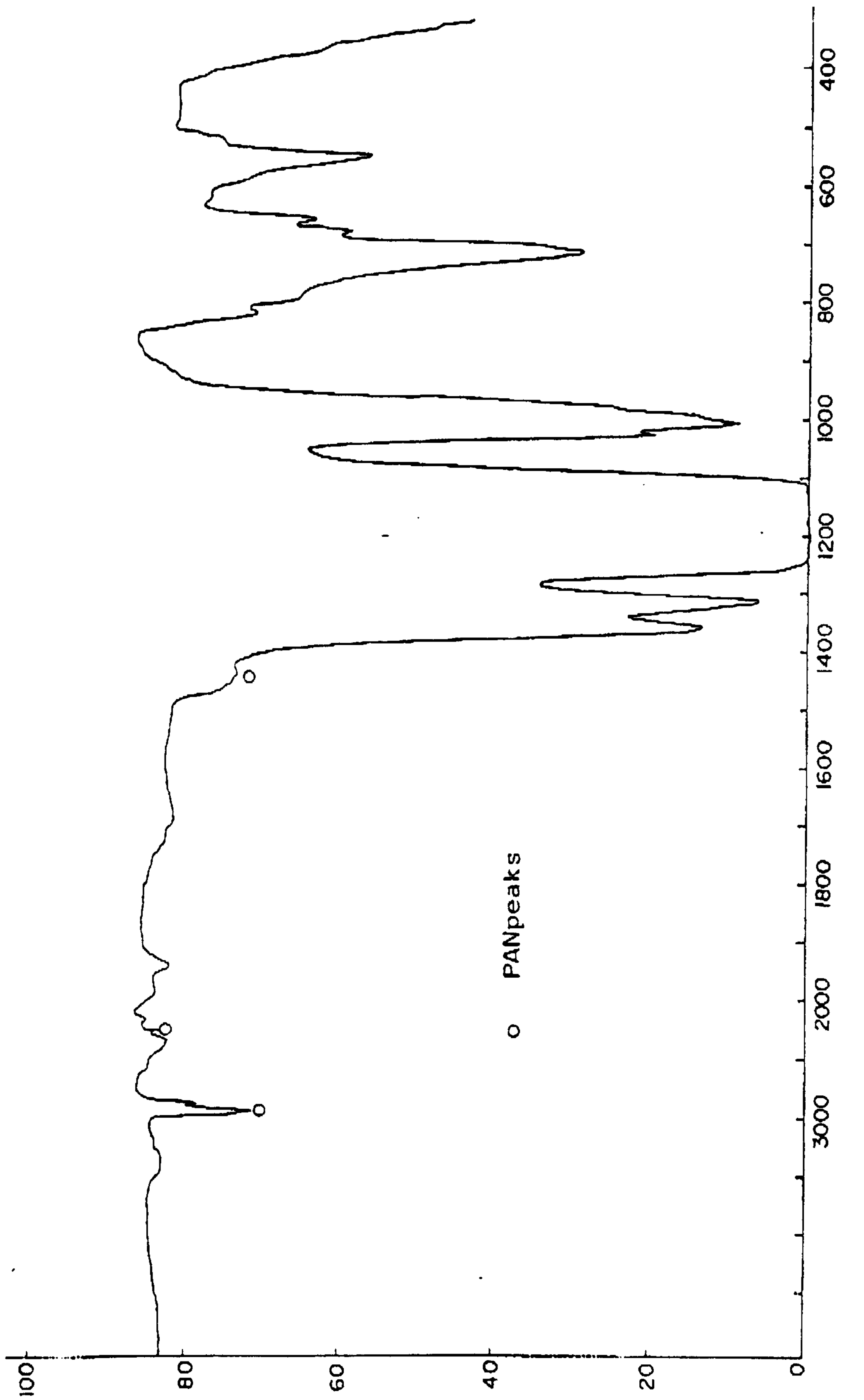

100
80
60
40
20
0
400
600
800
1000
1200
1400
1600
1800
2000
3000
o PANpeaks

Fig. 8

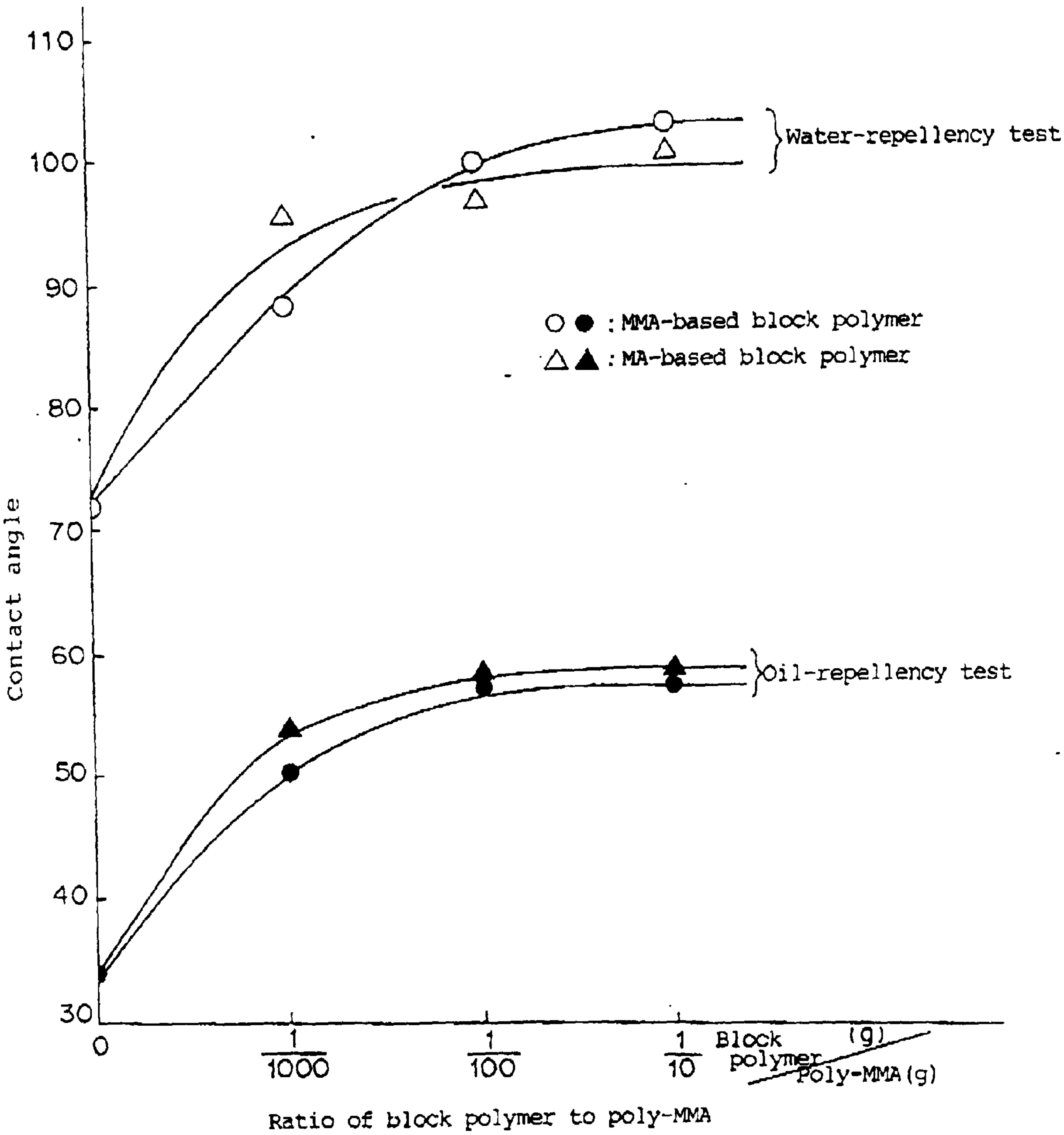
110
100
90
80
70
60
50
40
30
Contact angle
Water-repellency test
Oil-repellency test
○ ● : MMA-based block polymer
△ ▲ : MA-based block polymer
0
1/1000
1/100
1/10
Block polymer (g) / Poly-MMA (g)
Ratio of block polymer to poly-MMA

Fig. 9

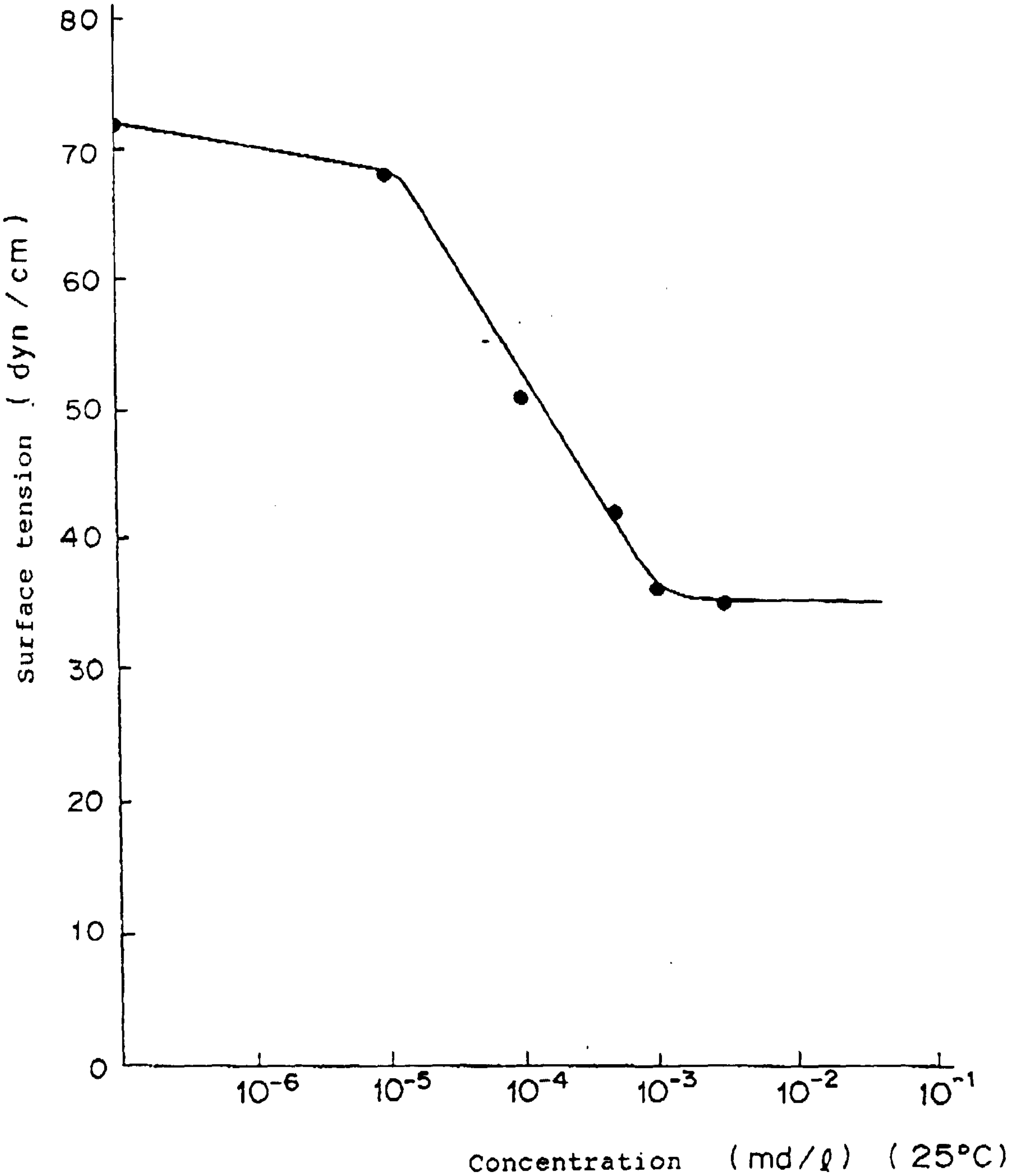
80
70
60
50
40
30
20
10
0
Surface tension ( dyn / cm )
10-6
10-5
10-4
10-3
10-2
10-1
Concentration (md/ℓ) (25°C)